# EUROPEAN PATENT APPLICATION

(11) **EP 4 589 992 A1**
(43) Date of publication of application: **23.07.2025**
(21) Application number: 24210764.7
(22) Date of filing: 05.11.2024
(51) Int. Cl.: H04R 5/033, H04R 3/12

(54) **WIRELESS AUDIO SYSTEM THAT SUPPORTS BLUETOOTH LOW ENERGY AUDIO AND SETS UP SNOOP LINKS FOR AUDIO SINK DEVICES AND RELATED WIRELESS AUDIO METHOD**

(30) Priority: 18.01.2024 US 202463622488 P; 31.10.2024 US 202418934189
(71) Applicant: Airoha Technology Corp., 300 Hsinchu City (TW)
(72) Inventor: SUNG, Chih-Wei, 320 Taoyuan City (TW); JIA, Jing-Syuan, 302 Hsinchu County (TW); HSIEH, Ming-Yi, 308 Hsinchu County (TW)
(74) Representative: Hoefer & Partner Patentanwälte mbB

(57) **Abstract**

A wireless audio system (100) supports Bluetooth Low Energy, LE, Audio, and includes a first audio sink device (104) and a second audio sink device (106). The first audio sink device (104) establishes a first LE isochronous, ISO, link (108) between the first audio sink device (104) and an audio source device (102). The second audio sink device (106) establishes a second LE ISO link (110) between the second audio sink device (106) and the audio source device (102). In addition, the first audio sink device (104) sets up a first snoop link (114) that snoops audio packets transmitted over the second LE ISO link (110), and the second audio sink device (106) sets up a second snoop link (116) that snoops audio packets transmitted over the first LE ISO link (108).

## Description

### CROSS REFERENCE TO RELATED APPLICATIONS

This application claims the benefit of U.S. Provisional Application No. 63/622,488, filed on January 18th, 2024. The content of the application is incorporated herein by reference.

### BACKGROUND OF THE INVENTION

### 1. FIELD OF THE INVENTION

The present invention relates to wireless communications, and more particularly, to a wireless audio system that supports Bluetooth Low Energy (LE) Audio and sets up snoop links for audio sink devices and a related wireless audio method.

### 2. DESCRIPTION OF THE PRIOR ART

Bluetooth is by far the most recognized wireless standard for audio streaming. Recently, Bluetooth LE Audio is developed to enhance performance in power consumption, latency, and bandwidth. According to the Bluetooth LE Audio specification, true wireless stereo (TWS) earbuds establish only a single LE isochronous (ISO) link on each earbud. Hence, one earbud gets a single channel (L/R) audio data from a content provider such as a smart phone or an audio player. Since each earbud is unable to get stereo audio (e.g., spatial audio), any stereo-dependent audio effects can only be done at the content provider. Furthermore, since each earbud of TWS earbuds that support Bluetooth LE Audio listens to an independent LE ISO link, one earbud's receiving quality is limited by signal quality directed to itself. As a result, user experience may be degraded due to low signal quality on one earbud.

### SUMMARY OF THE INVENTION

One of the objectives of the claimed invention is to provide a wireless audio system that supports Bluetooth LE Audio and sets up snoop links for audio sink devices and a related wireless audio method. A wireless audio system and a wireless audio method according to the invention are defined in the independent claims. The dependent claims define preferred embodiments thereof.

According to a first aspect of the present invention, an exemplary wireless audio system that supports Bluetooth LE Audio is disclosed. The exemplary wireless audio system includes a first audio sink device and a second audio sink device. The first audio sink device is arranged to establish a first LE isochronous (ISO) link between the first audio sink device and an audio source device. The second audio sink device is arranged to establish a second LE ISO link between the second audio sink device and the audio source device. The first audio sink device is further arranged to set up a first snoop link that snoops audio packets transmitted over the second LE ISO link, and the second audio sink device is further arranged to set up a second snoop link that snoops audio packets transmitted over the first LE ISO link.

According to a second aspect of the present invention, an exemplary wireless audio method that supports Bluetooth LE Audio is disclosed. The exemplary wireless audio method includes: establishing a first LE ISO link between a first audio sink device and an audio source device; establishing a second LE ISO link between a second audio sink device and the audio source device; setting up a first snoop link at the first audio sink device to snoop audio packets transmitted over the second LE ISO link; and setting up a second snoop link at the second audio sink device to snoop audio packets transmitted over the first LE ISO link.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a diagram illustrating a wireless audio system according to an embodiment of the present invention.
FIG. 2 is a diagram illustrating behaviors of TWS earbuds without using the proposed snoop links.
FIG. 3 is a diagram illustrating behaviors of TWS earbuds using the proposed snoop links.
FIG. 4 is a diagram illustrating packet lost recovery achieved by audio packets relayed from one audio sink device to another audio sink device according to an embodiment of the present invention.
FIG. 5 is a flowchart illustrating a wireless audio method that supports Bluetooth LE Audio according to an embodiment of the present invention.

### DETAILED DESCRIPTION

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

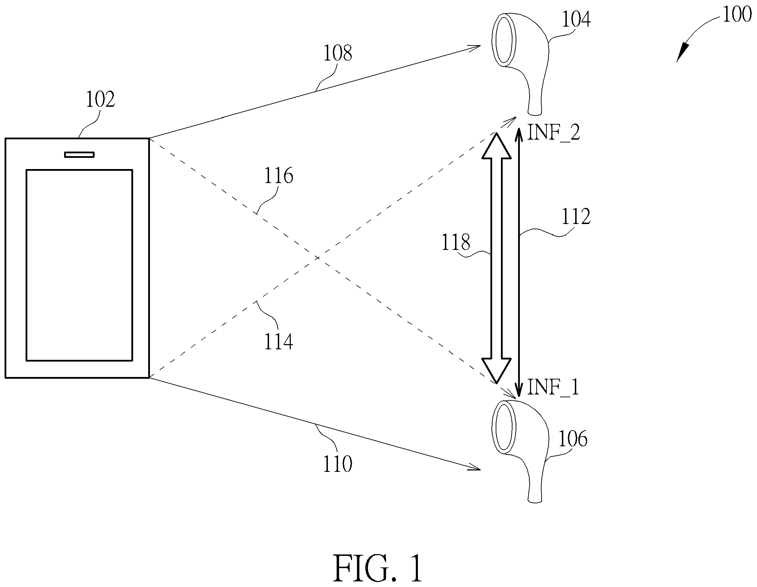

FIG. 1 is a diagram illustrating a wireless audio system according to an embodiment of the present invention. The wireless audio system 100 supports Bluetooth LE Audio, and includes an audio source device 102 and a plurality of audio sink devices 104 and 106. For example, the audio source device 102 is a content provider such as a smart phone or an audio player, and the audio sink devices 104 and 106 are TWS earbuds including a left-channel earbud and a right-channel earbud paired with each other. According to the Bluetooth LE Audio specification, TWS earbuds establish only a single LE ISO link on each earbud. Hence, the audio sink device (e.g., left-channel earbud) 104 is arranged to establish a single LE ISO link 108 between the audio sink device 104 and the audio source device (e.g., smart phone or audio player) 102, and the audio sink device (e.g., right-channel earbud) 106 is arranged to establish a single LE ISO link 110 between the audio sink device 106 and the audio source device (e.g., smart phone or audio player) 102.

In this embodiment, the audio sink device 104 is further arranged to set up a snoop link 114 that snoops audio packets transmitted over the LE ISO link 110 dedicated to the audio sink device 106, and the audio sink device 106 is further arranged to set up a snoop link 116 that snoops audio packets transmitted over the LE ISO link 108 dedicated to the audio sink device 104. For example, the audio sink devices 104 and 106 set up the snoop links 114 and 116 through a control channel 112 between the audio sink devices 104 and 106. Hence, the audio sink device 104 is further arranged to exchange ISO link information INF_1 of the LE ISO link 108 with the audio sink device 106 through the control channel 112, where setup of the snoop link 116 is based on the ISO link information INF_1 of the LE ISO link 108. Similarly, the audio sink device 106 is further arranged to exchange ISO link information INF_2 of the LE ISO link 110 with the audio sink device 104 through the control channel 112, where setup of the snoop link 114 is based on the ISO link information INF_2 of the LE ISO link 110. It should be noted that the audio source device 102 may be unaware of the snoop links 114 and 116 (i.e., the snoop function performed at the audio link devices 104 and 106).

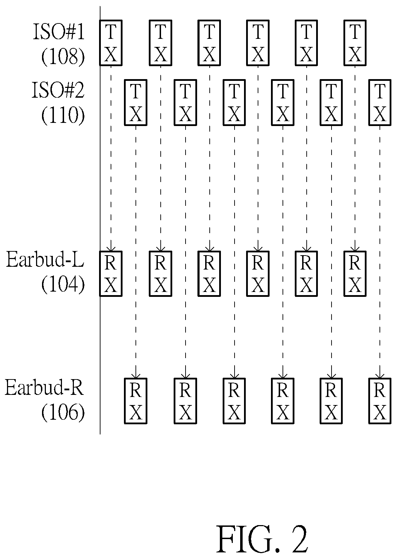

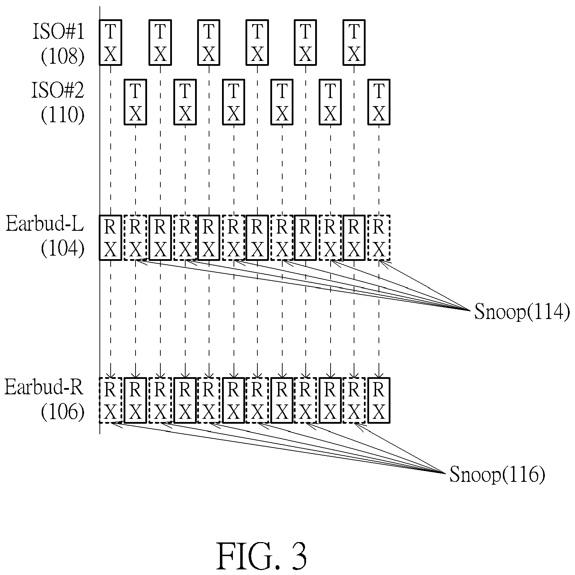

FIG. 2 is a diagram illustrating behaviors of TWS earbuds without using the proposed snoop links. FIG. 3 is a diagram illustrating behaviors of TWS earbuds using the proposed snoop links. With the help of the snoop link 114 which allows the audio sink device (e.g., left-channel earbud) 104 to snoop audio packets (e.g., right-channel audio packets) transmitted over the LE ISO link 110, the audio sink device 104 is able to get stereo audio from the LE ISO link 108 (which provides left-channel audio packets) and the snoop link 114 (which provides right-channel audio packets). Similarly, with the help of the snoop link 116 which allows the audio sink device (e.g., right-channel earbud) 106 to snoop audio packets (e.g., left-channel audio packets) transmitted over the LE ISO link 108, the audio sink device 106 is able to get stereo audio from the LE ISO link 110 (which provides right-channel audio packets) and the snoop link 116 (which provides left-channel audio packets).

Preferably, the audio sink device 104 may perform stereo audio processing/decoding according to audio packets received from the LE ISO link 108 and the snoop link 114, for creating any stereo-dependent audio effects locally. Similarly, the audio sink device 106 may perform stereo audio processing/decoding according to audio packets received from the LE ISO link 110 and the snoop link 116, for creating any stereo-dependent audio effects locally.

Since the snoop link 114 allows the audio sink device (e.g., left-channel earbud) 104 to snoop audio packets (e.g., right-channel audio packets) transmitted over the LE ISO link 110, the audio packets received by the snoop function of the audio sink device 104 may be used to facilitate packet lost recovery at the audio sink device (e.g., right-channel earbud) 106. Similarly, since the snoop link 116 allows the audio sink device (e.g., right-channel earbud) 106 to snoop audio packets (e.g., left-channel audio packets) transmitted over the LE ISO link 108, the audio packets received by the snoop function of the audio sink device 106 may be used to facilitate packet lost recovery at the audio sink device (e.g., left-channel earbud) 104. The same packet lost recovery concept may also be used to recover audio packets that are lost during transmission over snoop links 114, 116. For example, audio packets received by the audio sink device 104 through the dedicated LE ISO link 108 may be used to facilitate packet lost recovery of the snoop function of the audio sink device 106, and audio packets received by the audio sink device 106 through the dedicated LE ISO link 110 may be used to facilitate packet lost recovery of the snoop function of the audio sink device 104. Additional space diversity gain can be achieved by the snoop function and the relay function proposed by the present invention.

Preferably, the audio sink devices 104 and 106 are further arranged to set up an ISO timing-based link 118 between the audio sink devices 104 and 106 according to the ISO link information INF_1 of the LE ISO link 108 and the ISO link information INF_2 of the LE ISO link 110. After the ISO timing-based link 118 is established, the audio sink devices 104 and 106 exchange packets (e.g., control signals, ISO data, and/or sensor data) over the ISO timing-based link 118 in empty slots that the audio source device 102 does not transmit. In other words, the relay function needed for packet lost recovery can be achieved with the aid of ISO timing-based link 118.

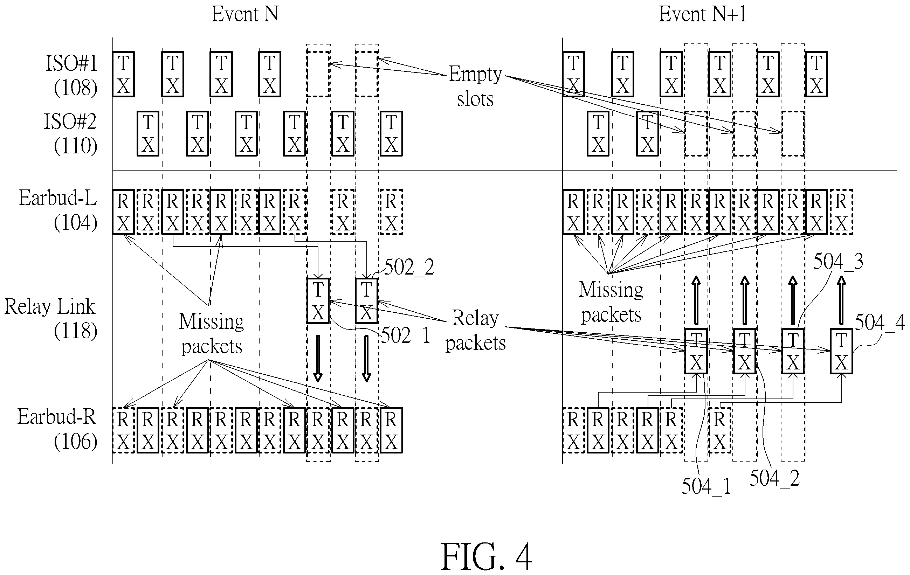

FIG. 4 is a diagram illustrating packet lost recovery achieved by audio packets relayed from one audio sink device 104 (or 106) to another audio sink device 106 (or 104) according to an embodiment of the present invention. Regarding packet lost recovery, the packets exchanged over the ISO timing-based link 118 (which acts as a relay link) may include audio packets 502_1, 502_2 transmitted from the audio sink device 104 to the audio sink device 106 and audio packets 504_1, 504_2, 504_3, 504_4 transmitted from the audio sink device 106 to the audio sink device 104.

Since the audio packet 502_1 sent from the source device 102 over the dedicated LE ISO link 108 is received by the audio sink device 104 and is not received by the audio sink device 106 through the snoop link 116, the audio packet 502_1 is relayed from the audio sink device 104 to the audio sink device 106 over the ISO timing-based link 118. In this way, the audio packet 502_1 can be used by the audio sink device 106 to recover an audio packet that is lost during transmission over the snoop link 116.

Since the audio packet 502_2 sent from the source device 102 over the dedicated LE ISO link 110 is not received by the audio sink device 106 and is received by the audio sink device 104 through the snoop link 114, the audio packet 502_2 is relayed from the audio sink device 104 to the audio sink device 106 over the ISO timing-based link 118. In this way, the audio packet 502_2 can be used by the audio sink device 106 to recover an audio packet that is lost during transmission over the dedicated LE ISO link 110.

Since the audio packet 504_1 sent from the source device 102 over the dedicated LE ISO link 110 is received by the audio sink device 106 and is not received by the audio sink device 104 through the snoop link 114, the audio packet 504_1 is relayed from the audio sink device 106 to the audio sink device 104 over the ISO timing-based link 118. Similarly, since the audio packet 504_2 sent from the source device 102 over the dedicated LE ISO link 110 is received by the audio sink device 106 and is not received by the audio sink device 104 through the snoop link 114, the audio packet 504_2 is relayed from the audio sink device 106 to the audio sink device 104 over the ISO timing-based link 118. In this way, the audio packets 504_1, 504_2 can be used by the audio sink device 104 to recover audio packets that are lost during transmission over the snoop link 114.

Since the audio packet 504_3 sent from the source device 102 over the dedicated LE ISO link 108 is not received by the audio sink device 104 and is received by the audio sink device 106 through the snoop link 116, the audio packet 504_3 is relayed from the audio sink device 106 to the audio sink device 104 over the ISO timing-based link 118. Similarly, since the audio packet 504_4 sent from the source device 102 over the dedicated LE ISO link 108 is not received by the audio sink device 104 and is received by the audio sink device 106 through the snoop link 116, the audio packet 504_4 is relayed from the audio sink device 106 to the audio sink device 104 over the ISO timing-based link 118. In this way, the audio packets 504_3, 504_4 can be used by the audio sink device 104 to recover audio packets that are lost during transmission over the dedicated LE ISO link 108.

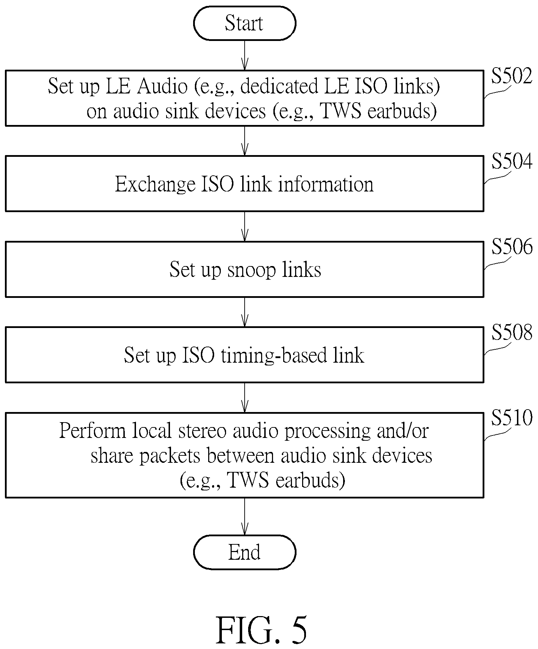

FIG. 5 is a flowchart illustrating a wireless audio method that supports Bluetooth LE Audio according to an embodiment of the present invention. For example, the wireless audio method may be employed by the wireless audio system 100 shown in FIG. 1. Provided that the result is substantially the same, the steps are not required to be executed in the exact order shown in FIG. 5. At step S502, LE ISO links 108 and 110 are set up between audio source device 102 and audio sink devices 104 and 106. At step S504, ISO link information INF_1 and INF_2 is exchanged between audio sink devices 104 and 106. At step S506, snoop links 114 and 116 are set up for audio sink devices 104 and 106 according to ISO link information INF_1 and INF_2. At step S508, the ISO timing-based link (which may act as a relay link) 118 is set up between audio sink devices 104 and 106 according to ISO link information INF_1 and INF_2. At step S510, the audio sink devices 104 and 106 enable the snoop function and/or the relay function. At step S512, the audio sink devices 104 and 106 perform local stereo audio processing/decoding according to audio packets obtained from LE ISO links and snoop links, and/or share packets (e.g., control signals, ISO data, and/or sensor data) through the ISO timing-based link 118. It should be noted that steps S506 and S508 may be swapped or may be executed in parallel. As a person skilled in the art can readily understand details of each step after reading above paragraphs directed to the wireless audio system 100, further description is omitted here for brevity.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A wireless audio system (100) that supports Bluetooth Low Energy, in the following also referred to as LE, Audio comprising:
a first audio sink device (104), arranged to establish a first LE isochronous, in the following also referred to as ISO, link (108) between the first audio sink device (104) and an audio source device (102);
a second audio sink device (106), arranged to establish a second LE ISO link (110) between the second audio sink device (106) and the audio source device (102);
wherein the first audio sink device (104) is further arranged to set up a first snoop link (114) that snoops audio packets transmitted over the second LE ISO link (110), and the second audio sink device (106) is further arranged to set up a second snoop link (116) that snoops audio packets transmitted over the first LE ISO link (108).

2. The wireless audio system (100) of claim 1, wherein the first audio sink device (104) and the second audio sink device (106) are true wireless stereo, in the following also referred to as TWS, earbuds.

3. The wireless audio system (100) of claim 1 or 2, wherein the first audio sink device (104) is further arranged to perform stereo audio processing according to audio packets received from the first LE ISO link (108) and the first snoop link (114), and the second audio sink device (106) is further arranged to perform stereo audio processing according to audio packets received from the second LE ISO link (110) and the second snoop link (116).

4. The wireless audio system (100) of any one of claims 1 to 3, wherein the first audio sink device (104) is further arranged to exchange ISO link information of the first LE ISO link (108) with the second audio sink device (106) through a control channel (112) between the first audio sink device (104) and the second audio sink device (106), where setup of the second snoop link (116) is based on the ISO link information of the first LE ISO link (108); and the second audio sink device (106) is further arranged to exchange ISO link information of the second LE ISO link (110) with the first audio sink device (104) through the control channel (112) between the first audio sink device (104) and the second audio sink device (106), where setup of the first snoop link (114) is based on the ISO link information of the second LE ISO link (110).

5. The wireless audio system of claim 4, wherein the first audio sink device and the second audio sink device are further arranged to set up an ISO timing-based link (118) between the first audio sink device (104) and the second audio sink device (106) according to the ISO link information of the first LE ISO link (108) and the ISO link information of the second LE ISO link (110); and the first audio sink device (104) and the second audio sink device (106) exchange packets over the ISO timing-based link (118) in empty slots that the audio source device (102) does not transmit.

6. The wireless audio system of claim 5, wherein the packets exchanged over the ISO timing-based link (118) comprise at least one first audio packet transmitted from the first audio sink device (104) to the second audio sink device (106) and at least one second audio packet transmitted from the second audio sink device (106) to the first audio sink device (104), where the at least one first audio packet is received by the first audio sink device (104) through the first snoop link (114) and is not received by the second audio sink device (106) through the second LE ISO link (110), the at least one second audio packet is received by the second audio sink device (106) through the second snoop link (116) and is not received by the first audio sink device (104) through the first LE ISO link (108), the at least one first audio packet is received by the first audio sink device (104) through the first LE ISO link (108) and is not received by the second audio sink device (106) through the second snoop link (116), or the at least one second audio packet is received by the second audio sink device (106) through the second LE ISO link (110) and is not received by the first audio sink device (104) through the first snoop link (114).

7. A wireless audio method that supports Bluetooth Low Energy, in the following also referred to as LE, Audio comprising:
establishing a first LE isochronous, in the following also referred to as ISO, link between a first audio sink device and an audio source device (S502);
establishing a second LE ISO link between a second audio sink device and the audio source device (S502);
setting up a first snoop link at the first audio sink device to snoop audio packets transmitted over the second LE ISO link (S506); and
setting up a second snoop link at the second audio sink device to snoop audio packets transmitted over the first LE ISO link (S506).

8. The wireless audio method of claim 7, wherein the first audio sink device and the second audio sink device are true wireless stereo, in the following also referred to as TWS, earbuds.

9. The wireless audio method of claim 7 or 8, further comprising:
performing stereo audio processing according to audio packets received from the first LE ISO link and the first snoop link (S510); and
performing stereo audio processing according to audio packets received from the second LE ISO link and the second snoop link (S510).

10. The wireless audio method of any one of claims 7 to 9, further comprising:
exchanging ISO link information of the first LE ISO link with the second audio sink device through a control channel between the first audio sink device and the second audio sink device (S510), where setup of the second snoop link is based on the ISO link information of the first LE ISO link; and
exchanging ISO link information of the second LE ISO link with the first audio sink device through the control channel between the first audio sink device and the second audio sink device (S510), where setup of the first snoop link is based on the ISO link information of the second LE ISO link.

11. The wireless audio method of claim 10, further comprising:
setting up an ISO timing-based link between the first audio sink device and the second audio sink device (S508) according to the ISO link information of the first LE ISO link and the ISO link information of the second LE ISO link; and
exchanging packets between the first audio sink device and the second audio sink device over the ISO timing-based link in empty slots that the audio source device does not transmit (S510).

12. The wireless audio method of claim 11, wherein the packets exchanged over the ISO timing-based link comprise at least one first audio packet transmitted from the first audio sink device to the second audio sink device and at least one second audio packet transmitted from the second audio sink device to the first audio sink device, where the at least one first audio packet is received by the first audio sink device through the first snoop link and is not received by the second audio sink device through the second LE ISO link, the at least one second audio packet is received by the second audio sink device through the second snoop link and is not received by the first audio sink device through the first LE ISO link, the at least one first audio packet is received by the first audio sink device through the first LE ISO link and is not received by the second audio sink device through the second snoop link, or the at least one second audio packet is received by the second audio sink device through the second LE ISO link and is not received by the first audio sink device through the first snoop link.
